# EUROPEAN PATENT APPLICATION

(11) **EP 4 799 859 A1**
(43) Date of publication of application: **02.09.2026**
(21) Application number: 24882167.0
(22) Date of filing: 08.10.2024
(51) Int. Cl.: B60N 2/42, A47C 1/024, B60N 2/22

(54) **SAFETY DEVICE FOR VEHICLE SEAT**

(30) Priority: 27.10.2023 JP 2023184899
(71) Applicant: AUTOLIV DEVELOPMENT AB, 44783 Vargarda (JP)
(72) Inventor: SAITO, Hiroyuki, Yokohama-shi, Kanagawa 222-8580 (JP); MAKIOKA, Takayuki, Yokohama-shi, Kanagawa 222-8580 (JP)
(74) Representative: Novagraaf International SA
(86) International application number: PCT/JP2024/035955
(87) International publication number: WO 2025/089051

(57) **Abstract**

ABSTRACT: To provide a safety device for vehicle seats that can adequately absorb the energy applied to the seat back. The safety device of the present invention includes a collision sensor for detecting vehicle collisions, an energy absorption mechanism for absorbing the impact applied to the vehicle seat, and a control mechanism for controlling operation or non-operation of the energy absorption mechanism based on the output of the collision sensor. The energy absorption mechanism 120 includes a rotatable plate 152 that rotates in conjunction with the rotation of the seat back of the vehicle seat, and a plastic deformation element 150 that is rotatably mounted together with the rotatable plate 152 and undergoes plastic deformation in conjunction with the rotation of the rotatable plate 152. In the event of the vehicle being in a collision, based on an activation signal from the control mechanism, the stopper unit 156 releases the connection between the worm wheel 118 and the rotatable plate 152, and energy is absorbed as the plastic deformation element 150 rotates and plastically deforms while passing through the insert element 154.

## Description

### TECHNICAL FIELD

The present invention relates to a vehicle seat safety device. In particular, the present invention relates to an effective safety device for an automobile seat with an integrated retractor equipped with a seat belt retractor.

### BACKGROUND ART

Automobiles are equipped with seat belts to restrain occupants in their seats. Mainstream seat belts are three-point seat belts that extend diagonally downward from near one of the occupant's shoulders and horizontally near the hip bones. In addition, recent automobiles are equipped with a retractor that automatically retracts seat belts immediately before and/or after a collision occurs.

Patent Document 1 discloses a retractor-integrated automobile seat in which a seat belt retractor is provided on the seat back. In seats with an integrated retractor, the seatbelt retractor is provided at the top of the seat back, and the upper end of the seatbelt extends from above the occupant's shoulder. Therefore, there is less space between the occupant's shoulder and the seatbelt, allowing the occupant to be securely restrained against the seat back.

Incidentally, in the event of a frontal collision in a vehicle, a force is applied that causes the seat back to tilt forward. Therefore, a mechanism is sometimes installed to rotate the seat back forward to absorb the energy.

However, appropriately setting the amount of energy absorption according to the amount of deformation of the seat back is difficult, and protecting an occupant in an optimal state according to the situation has therefore been difficult.

### RELATED ART DOCUMENTS

### PATENT DOCUMENTS

[Patent document 1] JP 2002-283892A

### SUMMARY OF THE INVENTION

### PROBLEM TO BE SOLVED BY THE INVENTION

The present invention was defined to solve the problems described above and an object thereof is to provide a safety device for vehicle seats that can appropriately absorb the energy applied to the seat back.

### MEANS FOR SOLVING THE PROBLEM

An invention that resolves the problem described above is a safety device provided in a vehicle seat, including:
a collision sensor that detects a collision of a vehicle;
an energy absorption mechanism that absorbs an impact applied to the seat; and
a control mechanism that controls operation and non-operation of the energy absorption mechanism based on output of the collision sensor.

Here, an acceleration sensor can be used as the "collision sensor" and outputs a detection signal when a vehicle collision occurs or immediately before the collision occurs. In addition, "operation" and "non-operation" of the energy absorption mechanism indicate a state in which torque applied to the seat back can be absorbed and a state in which torque applied to the seat back cannot be absorbed, respectively.

The control mechanism may include a locking mechanism that locks operation of the energy absorption mechanism when the collision sensor has not detected a collision of the vehicle, and unlocks operation when a frontal collision of the vehicle is detected.

The energy absorption mechanism may include a rotatable plate that rotates in conjunction with the rotation of the seat back of the vehicle seat, and a plastic deformation element that is rotatably provided together with the rotatable plate and undergoes plastic deformation in conjunction with the rotation of the rotatable plate.

The seat back may include a reclining mechanism for tilting the seat back forward or rearward, the reclining mechanism includes a rotatable gear member provided coaxially with the rotatable plate, and the locking mechanism connects and disconnects the rotatable gear member and the rotatable plate.

When a vehicle collision occurs, the connection between the rotatable gear member and the rotatable plate is released, allowing the plastic deformation element to plastically deform and absorb the torque applied to the seat back. On the other hand, in situations where no vehicle collision has occurred, the plastic deformation element does not function because the rotatable gear member and the rotatable plate are connected (locked). This enables avoiding unnecessary activation of the safety device. For example, in the case of a low-speed/low-impact vehicle collision where the airbags do not activate, the safety device can be locked (disabled) to allow for the reuse of the seats (continued use without replacement).

According to the present invention, the plastic deformation element does not deform when a load is applied to the seat during non-collision situations, and during a collision, the stopper is released, causing the plastic deformation element to deform and the energy absorption mechanism to function.

The locking mechanism may include a mating mechanism that mechanically interlocks members provided on the rotatable plate and the rotatable gear member.

The locking mechanism may include a pyrotechnic actuator that actuates the mating mechanism.

The plastic deformation element may be formed in the shape of a long strip and may include a linear portion provided in an arc shape along the outer periphery of the rotatable plate.

Here, "long strip-like" means a "strip-like" shape with a certain thickness, but can also include "wire-like" shapes. Energy absorption by the plastic deformation element can be achieved, for example, by continuous deformation of a metal piece, and characteristics thereof can be arbitrarily set by the shape and material properties of the plastic deformation element.

The plastic deformation element may absorb energy by being plastically deformed through being worked by a working member formed on the rotatable gear member, the working member clamping and drawing out the linear portion in association with rotation of the rotatable plate.

Here, "being plastically deformed by being worked" means being plastically deformed by moving a long plastic deformation element in a rubbing manner while strongly pressing against the long plastic deformation element.

The plastic deformation element may be formed so that the amount of energy absorbed is variable along the longitudinal direction.

The plastic deformation element may have a variable amount of energy absorption based on varying a cross-sectional shape along a longitudinal direction.

The amount of energy absorbed by the plastic deformation element may be varied by combining a plurality of materials having a different yield stress σ.

In these cases, setting the amount of energy absorbed by the plastic deformation element variable along the longitudinal direction enables optimal energy absorption characteristics to be obtained according to the mode of collision, the type of seat in which the safety device is installed (including shape and weight), and the like.

The vehicle seat may include a seat belt retractor.

Here, "equipped with a seat belt retractor" means that the retractor is provided and secured to some part of the seat, excluding cases where the seat belt retractor is secured to a vehicle structural component such as a pillar. The location may be the upper part or lower part of the seat back, or the like, which does not affect the withdrawal or retraction of the seat belt. Note that if the seat belt retractor is installed near the lower back of the seat back, a member for guiding the seat belt can be provided at the upper edge of the seat back.

The rotatable gear member may be a worm wheel, and the reclining mechanism may include a worm gear mechanism composed of the worm wheel and a worm that meshes therewith.

This type of structure is commonly used in automatic (electric) reclining mechanisms. When a worm gear mechanism composed of a worm wheel and a worm is adopted, the rotation of a worm shaft having a worm formed on the outer periphery thereof rotates the worm wheel via the worm, thereby enabling the seat back to recline. In the event of a vehicle collision, the worm shaft does not rotate, so the seat back cannot recline, and torque that would cause the seat back to tilt forward is absorbed by the plastic deformation element.

The reclining mechanism may include a lock member that restricts rotation of the rotatable gear member, and a lever that releases meshing between the rotatable gear member and the lock member and enables the angle of the seat back to be changed.

This type of structure is commonly used in manual reclining mechanisms. By releasing the engagement between the gear member and the locking member with a lever, the seat back can move freely and can be reclined. In the event of a vehicle collision, the rotatable gear member and the locking member are engaged, preventing the seat back from reclining. The torque that would cause the seat back to tilt forward is absorbed by the plastic deformation element.

### BRIEF DESCRIPTION OF THE DRAWINGS

FIG. 1 is a perspective view depicting a frame structure of a vehicle seat to which a safety device according to Embodiment 1 of the present invention can be applied;
FIG. 2 is a schematic perspective view depicting the structure of the safety device according to Embodiment 1 of the present invention, and is an enlarged view of a part of FIG. 1;
FIG. 3 is a top view depicting the structure around the safety device according to Embodiment 1 of the present invention;
FIG. 4 is a side view depicting the structure of a main part of the safety device according to Embodiment 1 of the present invention;
FIG. 5 is an exploded perspective view depicting the structure of the main part of the safety device according to Embodiment 1 of the present invention;
FIGS. 6(A) and (B) are side views depicting the structure of the main part of the safety device according to Embodiment 1 of the present invention, where (A) depicts the safety device in a locked (non-operating) state and (B) depicts the unlocked (operating) state, note that plastic deformation elements are omitted;
FIG. 7 is a perspective view depicting the structure of an angle sensor applicable to a vehicle seat according to Embodiment 1 of the present invention;
FIG. 8 is a block diagram depicting the configuration of a control system for a vehicle seat according to Embodiment 1 of the present invention;
FIGS. 9(A) and (B) are side views describing operation of the safety device according to Embodiment 1 of the present invention;
FIG. 10 is a side view depicting the operation of a safety device according to Embodiment 1 of the present invention, and depicts the safety device in a locked (non-operating) state;
FIG. 11 is a side view depicting the operation of a safety device according to Embodiment 1 of the present invention, and the safety device is depicted in the released state (activated state);
FIG. 12(A) is a perspective view depicting the structure of a safety device according to Embodiment 2 of the present invention, which may be applied to a seat in which the reclining operation of the seat back is performed manually, FIG. 12(B) is a top view depicting the structure around the safety device according to Embodiment 2;
FIG. 13 is an exploded perspective view depicting the structure of the main part of the safety device according to Embodiment 2 of the present invention;
FIG. 14 is a side view depicting the unlocking operation of the reclining mechanism of a vehicle seat according to Embodiment 2 of the present invention, in which (A) depicts the locked state and (B) depicts the unlocked state; and
FIGS. 15(A), (B), and (C) are perspective views depicting different aspects of plastic deformation elements applicable to the present invention.

### EMBODIMENTS OF THE INVENTION

### Embodiment 1

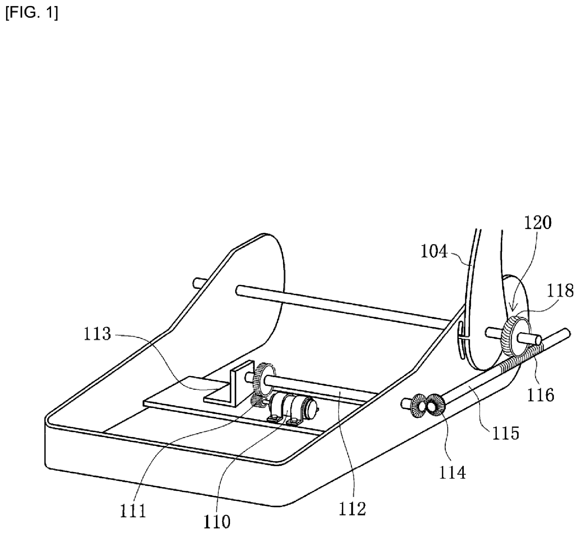

Embodiment 1 of the present invention will be described below with reference to FIG. 1 to FIG. 11. Embodiment 1 is applied to a vehicle seat of the type that uses motor power to recline the seat back.

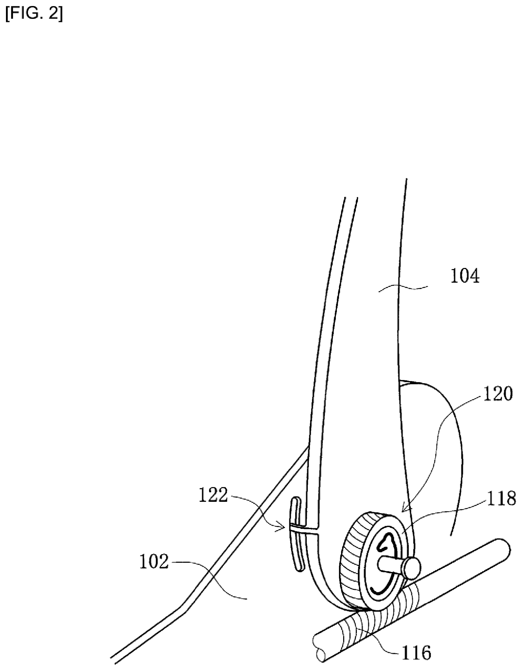

FIG. 1 is a perspective view depicting a frame structure of a vehicle seat to which a safety device according to Embodiment 1 of the present invention can be applied. FIG. 2 is a schematic perspective view depicting the structure of the safety device according to Embodiment 1 of the present invention, and is an enlarged view of a part of FIG. 1.

As depicted in FIG. 1, the reclining mechanism includes a motor 110 and a center shaft 112 that transmits power from the motor 110. A first end of the center shaft 112 is secured to the seat frame by a shaft support bracket 113. The power from the motor 110 is transmitted to a bevel gear mechanism composed of a pair of bevel gears 114 via a gear 111 provided on the center shaft 112 and the center shaft 112. A worm shaft 115 is connected to the bevel gears 114, and the rotation direction of the center shaft 112 is transmitted after being converted by 90° by the bevel gear mechanism 114 [sic]. The rotation of the worm shaft 115 is transmitted to the seat back frame 104 via the worm 116 formed thereon (outer peripheral surface) and the worm wheel 118. The worm wheel 118 corresponds to a rotatable gear member.

An energy absorption mechanism 120 according to the present embodiment is integrated into a reclining mechanism (118) and is configured to only apply a specified seat back rotational deformation torque when a collision occurs.

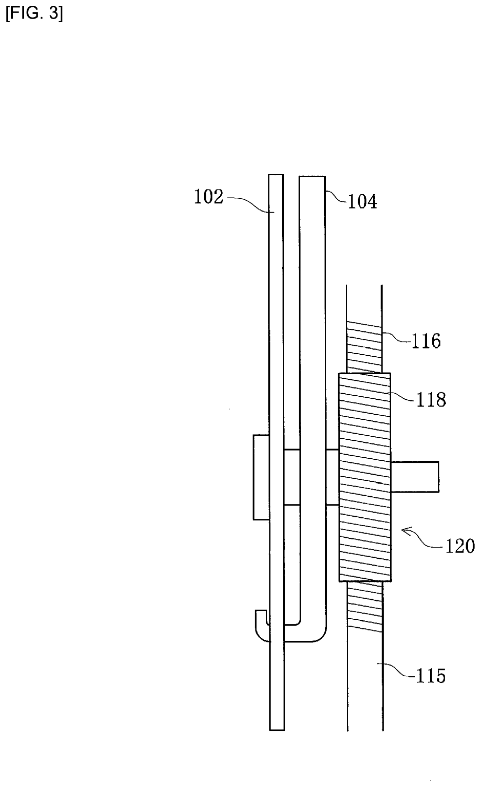

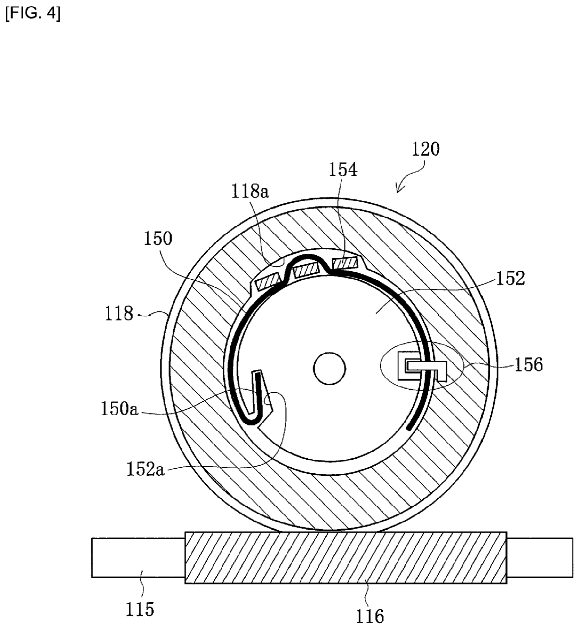

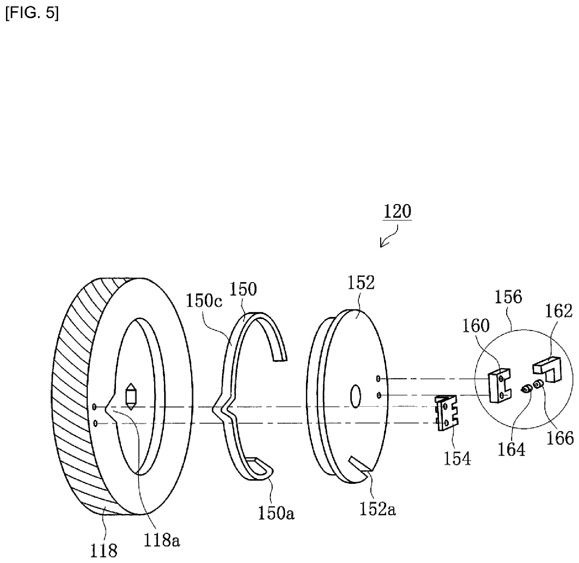

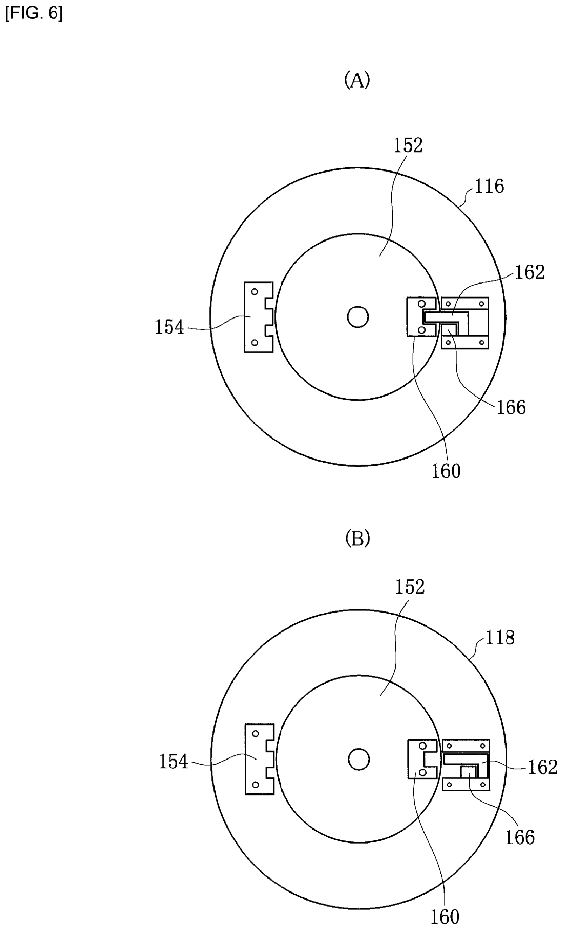

FIG. 3 is a top view depicting the structure around the safety device according to Embodiment 1 of the present invention. FIG. 4 is a side view depicting the structure of a main part of the safety device according to Embodiment 1 of the present invention. FIG. 5 is an exploded perspective view depicting the structure of the main part of the safety device according to Embodiment 1 of the present invention. FIGS. 6(A) and (B) are side views depicting the structure of the main part of the safety device according to Embodiment 1 of the present invention, where (A) depicts the safety device in a locked (non-operating) state and (B) depicts the unlocked (operating) state. Note that plastic deformation elements are omitted.

As depicted in FIG. 3, the energy absorption mechanism 120 is connected to the seat back frame 104 via a spacer and a hexagonal shaft (not depicted). Note that the energy absorption mechanism 120 is secured to the seat side structure by a cover bracket (not depicted).

As depicted in FIG. 4 and FIG. 5, the energy absorption mechanism 120 is integrated with the worm wheel 118 and includes a plastic deformation element 150, a rotatable plate 152 connected to the seat back frame 104, an insert element 154, and a stopper unit 156. The energy absorption mechanism 120 includes a rotatable plate 152 that rotates in conjunction with the rotation of the seat back of the vehicle seat, and a plastic deformation element 150 that is rotatably mounted together with the rotatable plate 152 and undergoes plastic deformation in conjunction with the rotation of the rotatable plate 152. The plastic deformation element 150 is made of metal such as steel or a light metal. The plastic deformation element 150 is formed from a metal piece into a long strip and is provided in an arc shape along the outer periphery of the rotatable plate 152. A notch 152a is formed in a part of the rotatable plate 152, and a bent end part 150a of the plastic deformation element 150 is locked thereinto, so that the rotatable plate 152 and the plastic deformation element 150 rotate together as a single unit.

The plastic deformation element 150 is formed in the shape of a long strip and includes a linear portion 150c that is provided in an arc shape along the outer periphery of the rotatable plate 152. The plastic deformation element 150 absorbs energy by being plastically deformed as the insert element 154 formed on the worm wheel 118 clamps and draws out the linear portion 150c in association with rotation of the rotatable plate 150 [sic].

As depicted in FIG. 5 and FIG. 6, the stopper unit 156 includes a stopper member 160 that is U-shaped when viewed from the front, a movable element 162 that can be fitted with the stopper member 160, and a piston 166 and pyro actuator 164 that drive the movable element 162. The stopper unit 156 corresponds to the locking mechanism. The combination of the stopper member 160 and the movable element 162 constitutes the mating mechanism. The pyro-actuator 164 corresponds to a pyrotechnic actuator. Other components, including shielding members and brackets, are not depicted. The insert element 154 is secured to the side surface of the worm wheel 118, and the comb-shaped tip end part thereof fits into a recessed part 118a formed in the worm wheel 118. Furthermore, the plastic deformation element 150 is inserted so as to be intertwined with the comb-shaped portion of the insert element 154, and the plastic deformation element 150 is plastically worked at that location. The insert element 154 corresponds to the working member.

As depicted in FIG. 6, the stopper member 160 is secured to the side surface of the rotatable plate 152, other members such as the pyro actuator 164 are secured to the side surface of the worm wheel 118, and the movable element 162 connects the rotatable plate 152 and the worm wheel 118 by mating together with the stopper member 160.

In FIG. 6, (A) depicts the locked state, and (B) depicts the released state. In situations where no collision has occurred, the movable element 162 is mated with the stopper member 160, as depicted in (A). Note that as depicted in FIG. 6(A), a small gap is formed between the movable element 162 and the stopper member 160 when they are mated together.

On the other hand, if a collision occurs, an activation signal is sent to the pyro-actuator 164. When the pyro-actuator 164 is activated, the piston 166 moves radially outward, disengaging the movable element 162 from the stopper member 160.

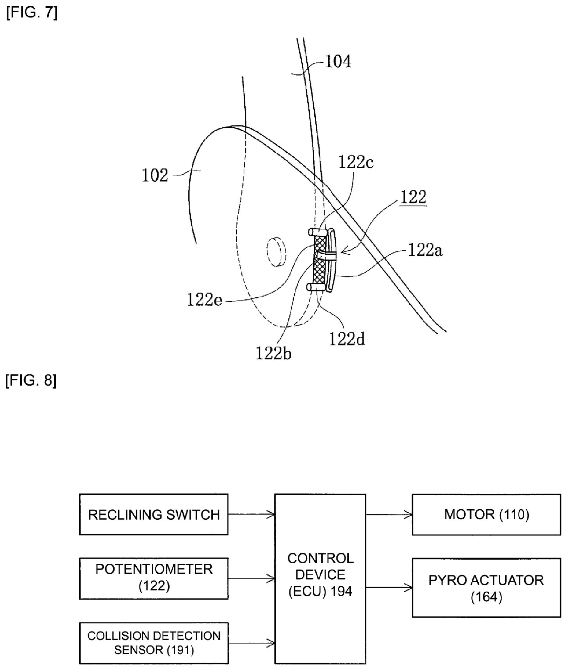

FIG. 7 is a perspective view depicting the structure of an angle sensor 122 applicable to Embodiment 1 of the present invention. FIG. 8 is a block diagram depicting the configuration of the control system of a safety device according to Embodiment 1 of the present invention.

As depicted in FIG. 7, the angle sensor (potentiometer) 122 includes a slit 122a formed in the side frame 102, a sliding member 122b that can move along the slit 122a, and a power terminal 122c and ground terminal 122d electrically connected to both ends of the resistance region 122e. In addition to a potentiometer, a rotary encoder or the like can be used as the angle sensor 122.

As depicted in FIG. 8, the safety device according to the present embodiment includes a reclining switch (not depicted) for adjusting the angle of the seat back 10, a potentiometer 122 for detecting the reclining angle, and a collision detection sensor 191 for detecting a vehicle collision. A control device 194 then adjusts the angle of the seat back 10 by rotating the motor 110 based on the signal from the reclining switch. In addition, the energy absorption mechanism 120 is locked and unlocked by controlling the pyro actuator 164 based on the output from the collision detection sensor 191. The control device 194 constitutes a part of the control mechanism.

### Reclining Mechanism Operation

Operation of the seat's reclining mechanism will be described below with reference to FIG. 1 and FIG. 2. The occupant can adjust the angle of the seat back 10 by operating a reclining switch (FIG. 8) attached to the side of the seat. The system can determine the current angle using the potentiometer 122 attached to the seat side frame 102, and can define the allowable rotation angle of the seat back 10. In addition to the potentiometer 122, a limit switch can also be provided.

When the reclining switch is operated to tilt the seat back 10 backward, a signal is sent to the control device 194. The control device 194 drives the motor 110 and transmits power to the seat back frame 104 via the center shaft 112, bevel gears 114, worm shaft 115, and worm gear mechanisms (116, 118). This causes the seat back frame 104 to rotate (swing) backward.

On the other hand, when raising the seat back 10 forward, the control device 194 rotates the motor 110 in the opposite direction to that for tilting backward, and transmits the power to the seat back frame 104 via the center shaft 112, bevel gears 114, worm shaft 115, and worm gear mechanisms (116, 118). This causes the seat back frame 104 to rotate (swing) forward.

### Safety Device Operation

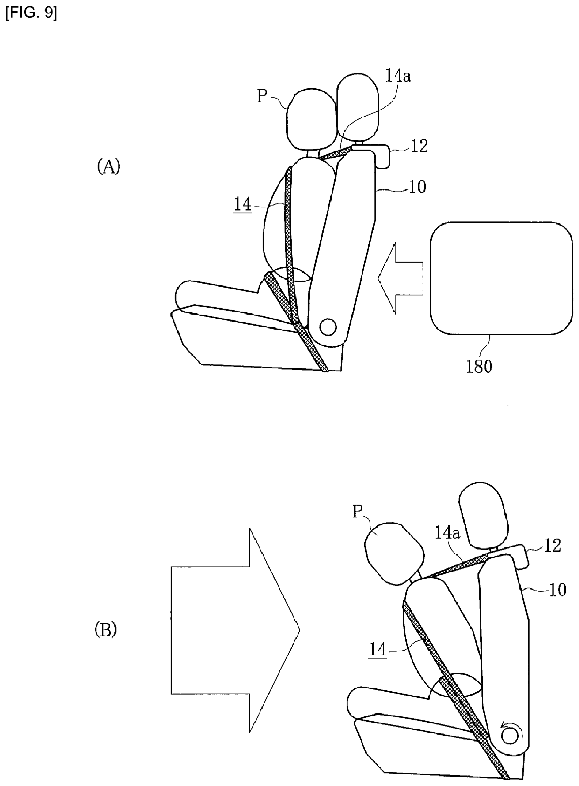

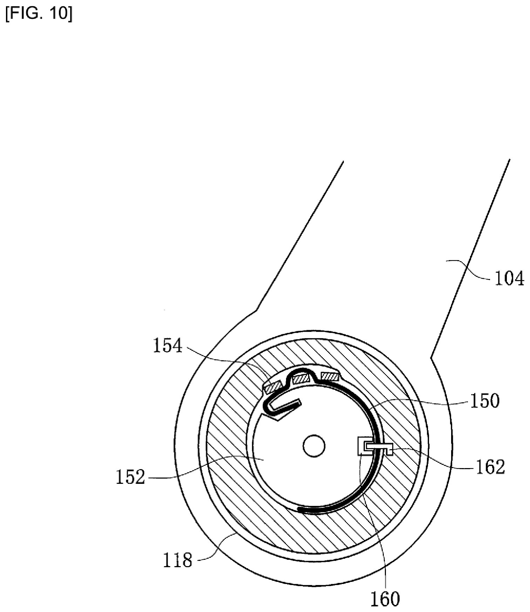

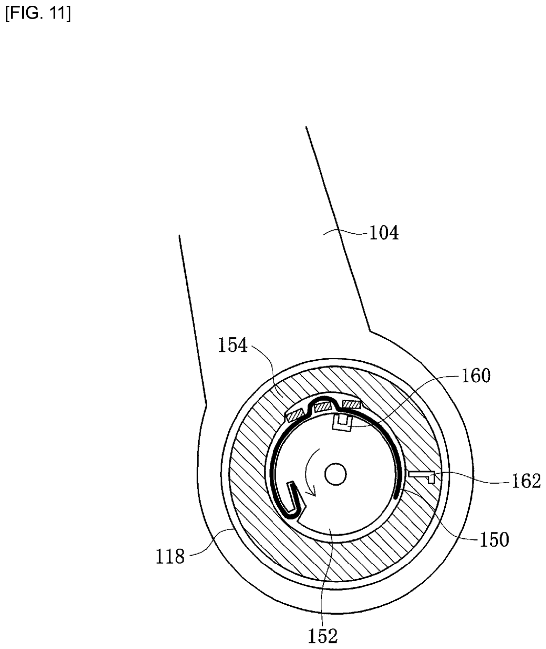

FIGS. 9(A) and (B) are side views describing operation of the safety device according to Embodiment 1 of the present invention. FIG. 10 is a side view depicting the operation of a safety device according to Embodiment 1 of the present invention, and depicts the safety device in a locked (non-operating) state. FIG. 11 is a side view depicting the operation of a safety device according to Embodiment 1 of the present invention, and the safety device is depicted in the released state (activated state).

In situations where no vehicle collision has occurred, as depicted in FIG. 10, the movable element 162 engages with the stopper member 160, the stopper unit 156 becomes active, and the energy absorption mechanism 120 is not activated. As depicted in FIG. 9(A), even in situations where no collision has occurred, for example, when luggage 180 such as a suitcase hits the seat back 10 from behind and an impact is applied to the seat back 10, the stopper unit 120 [sic] operates effectively and the energy absorption mechanism 120 does not function.

On the other hand, when a vehicle collision occurs, a signal from the collision sensor 191 is sent to the pyro actuator 164. For example, the collision sensor 191 can utilize the forward airbag deployment signal during a frontal collision. When the pyro-actuator 164 is activated, as depicted in FIG. 11, the movable element 162 of the stopper unit 120 [sic] detaches from the stopper member 160, and the rotatable plate 152 becomes rotatable. When a large load is applied to the seat back 10 during a collision, the seat back frame 104 (seat back 10) and the rotatable plate 152 rotate forward, as depicted in FIG. 9(B) and FIG. 11.

As depicted in FIG. 1, FIG. 2, and FIG. 4, the worm wheel 118 is connected to the worm gear 116, and input from the worm wheel 118 side cannot rotate the worm gear 116 (due to the reduction ratio). The rotatable plate 152 rotates with the plastic deformation element 150, and the plastic deformation element 150 is "worked" (= plastically deformed) by the insert element 154. Energy is absorbed by the deformation of this plastic deformation element 150.

Note that in vehicles equipped with various collision detection sensors (radar, LiDAR, cameras, and the like), a trigger signal (mainly used for collision mitigation braking and collision avoidance braking) detecting the risk of collision can be input to an ECU 194, driving the reclining motor 110 and moving the reclining angle to the optimal position until just before a collision. For example, if a collision occurs while the seat back 10 is deeply reclined, controlling the motor 110 so that the seat back 10 is returned to an upright posture by immediately before the collision is preferable.

### Embodiment 2

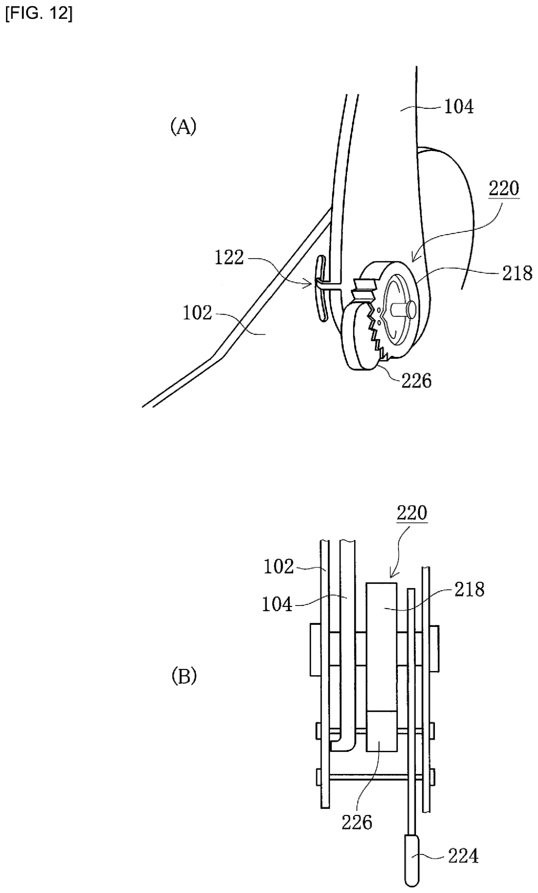

Embodiment 2 of the present invention will be described below with reference to FIG. 12 to FIG. 14. Embodiment 2 is applied to a vehicle seat of a type in which the seat back is reclined manually without using motor power. In the description of the present embodiment (with drawings), structural elements that are the same as or correspond to those in Embodiment 1 described above are denoted by the same reference numerals, and redundant descriptions are omitted.

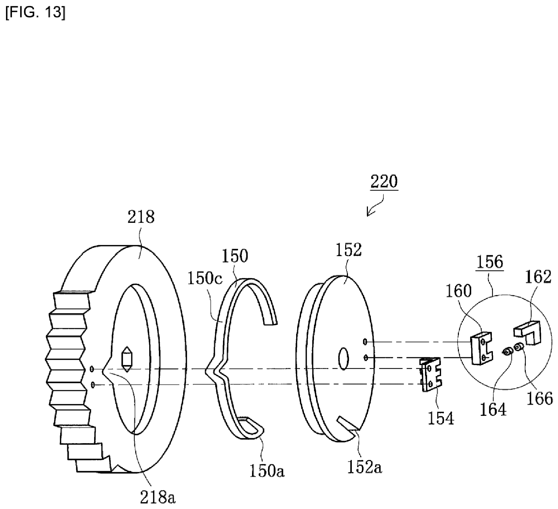

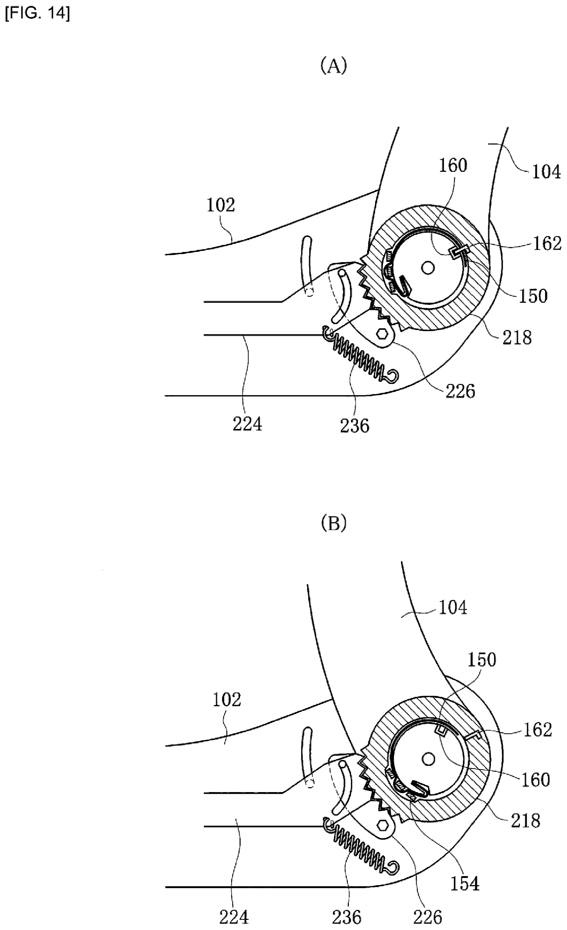

FIG. 12(A) is a perspective view depicting the structure of a safety device according to Embodiment 2 of the present invention, which may be applied to a seat in which the reclining operation of the seat back is performed manually. FIG. 12(B) is a top view depicting the structure around the safety device according to Embodiment 2; FIG. 13 is an exploded perspective view depicting the structure of the main part of the safety device according to Embodiment 2 of the present invention. FIG. 14 is a side view depicting the unlocking operation of the reclining mechanism of a vehicle seat according to Embodiment 2 of the present invention, in which (A) depicts the locked state and (B) depicts the unlocked state.

The reclining mechanism according to the present embodiment includes a gear member 218 connected to the seat back frame 104, a lock plate 226, and a lever 224 for releasing the engagement between the gear member 218 and the lock plate 226. The lock plate 226 corresponds to a locking member, and the gear member 218 corresponds to the rotatable gear member. When the lever 224 is lifted upward, the engagement between the lock plate 226 and the gear member 218 is released. As a result, the seat back 10 is in a free state, and the reclining angle can be adjusted. Note that a first end of a spring 236 is connected to the lever 224, and a second end of the spring 236 is connected to a cover (not depicted).

As depicted in FIGS. 12 to 14, an energy absorption mechanism 220 is integrated with the gear member 218 and includes a plastic deformation element 150, a rotatable plate 152 connected to the seat back frame 104, an insert element 154, and a stopper unit 156. The configuration and basic operation of the stopper unit 156 are generally the same as those of Embodiment 1 described above.

The insert element 154 is secured to the side surface of a gear member 218, and the comb-shaped tip end part mates with a recessed part 218a formed in the gear member 218. Furthermore, the plastic deformation element 150 is inserted so as to be intertwined with the comb-shaped portion of the insert element 154, and the plastic deformation element 150 is plastically worked at that location.

As depicted in FIG. 13, the stopper member 160 is secured to the side surface of the rotatable plate 152, other members such as the pyro actuator 164 are secured to the side surface of the gear member 218, and the movable element 162 connects the rotatable plate 152 and the gear member 218 by mating with the stopper member 160.

In FIG. 14, (A) depicts the locked state, and (B) depicts the released state. In situations where no collision has occurred, the movable element 162 is mated with the stopper member 160, as depicted in (A). Note that as depicted in FIG. 14(A), a small gap is formed between the movable element 162 and the stopper member 160 in a mated state.

On the other hand, if a collision occurs, an activation signal is sent to the pyro-actuator 164. When the pyro-actuator 164 is activated, the piston 166 moves radially outward, as depicted in FIG. 14(B), disengaging the movable element 162 from the stopper member 160.

### Other Aspects

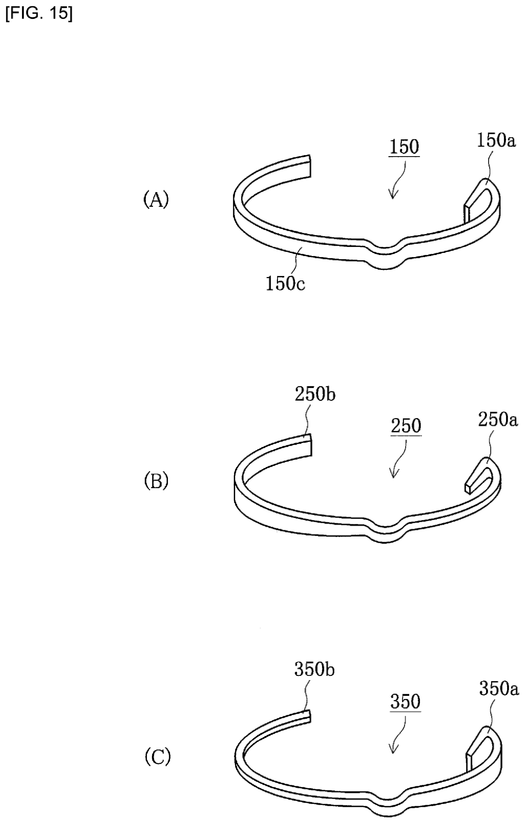

FIGS. 15(A), (B), and (C) are perspective views depicting different aspects of plastic deformation elements applicable to the present invention. The plastic deformation element 150 depicted in FIG. 15(A) has a cross-sectional shape that is constant over the entire longitudinal direction, and exhibits a constant rotational torque characteristic (energy absorption characteristic) over the entire longitudinal direction.

A plastic deformation element 250 depicted in FIG. 15(B) is formed so that the cross-sectional area gradually increases from a tip end part 250a towards a second end, and exhibits a progressive (increasing) characteristic with respect to energy absorption. In this case, the amount of energy absorbed is small in the initial stages when energy absorption by the plastic deformation element 250 begins, but the amount of energy absorbed will gradually increase.

A plastic deformation element 350 depicted in FIG. 15(C) is formed so that the cross-sectional area gradually decreases from a tip end part 350a toward a second end, and exhibits a degressive (decreasing) characteristic with respect to energy absorption. In this case, the amount of energy absorbed is large in the initial stages when energy absorption by the plastic deformation element 350 begins, but the amount of energy absorbed gradually decreases.

For the plastic deformation elements 150, 250, and 350, the energy absorption characteristics can be adjusted by changing the cross-sectional area, or by combining materials with a plurality of different strengths (in other words, yield stress σ). The yield stress σ is the stress at which plastic deformation begins in a metallic material. When a metallic material is subjected to stress exceeding the yield strength thereof, the material will not return to the original shape of the material even after the load is removed. Yield stress has a unique value for each type of metallic material.

While the present invention has been described with reference to the abovementioned illustrative embodiments, many equivalent changes and variations will be obvious to a person of ordinary skill in the art from the present disclosure. Therefore, the abovementioned illustrative embodiments of the present invention are presumably illustrative and not limiting. The described embodiments may have various modifications made without departing from the spirit and scope of the present invention. For example, the energy absorption mechanism according to the present invention can be provided on both the left and right sides of the seat back.

### DESCRIPTION OF CODES

118. Worm wheel
120. Energy absorption mechanism
150. Plastic deformation element
150c. Linear portion
152. Rotatable plate
154. Insert element
156. Stopper unit
160. Stopper member
162. Movable element
164. Pyro actuator
166. Piston
191. Collision detection sensor
194. Control device
218. Gear member
220. Energy absorption mechanism
224. Lever
226. Lock plate

## Claims

1. A safety device provided in a vehicle seat, comprising:
a collision sensor that detects a collision of a vehicle;
an energy absorption mechanism that absorbs an impact applied to the vehicle seat; and
a control mechanism that controls operation and non-operation of the energy absorption mechanism based on output of the collision sensor.

2. The safety device according to claim 1, wherein the control mechanism includes a locking mechanism that locks operation of the energy absorption mechanism when a collision of the vehicle has not been detected by the collision sensor, and releases the lock when a frontal collision of the vehicle has been detected.

3. The safety device according to claim 1, wherein the energy absorption mechanism includes a rotatable plate that rotates in association with rotation of a seat back of the vehicle seat, and a plastic deformation element provided so as to be rotatable together with the rotatable plate and that plastically deforms in association with rotation of the rotatable plate.

4. The safety device according to claim 2, wherein the energy absorption mechanism includes a rotatable plate that rotates in association with rotation of a seat back of the vehicle seat, and a plastic deformation element provided so as to be rotatable together with the rotatable plate and that plastically deforms in association with rotation of the rotatable plate.

5. The safety device according to claim 4, wherein the seat back includes a reclining mechanism for tilting the seat back forward or rearward, the reclining mechanism includes a rotatable gear member provided coaxially with the rotatable plate, and the locking mechanism connects and disconnects the rotatable gear member and the rotatable plate.

6. The safety device according to claim 5, wherein the locking mechanism includes a mating mechanism that mechanically mates together members provided on the rotatable plate and the rotatable gear member.

7. The safety device according to claim 6, wherein the locking mechanism includes a pyrotechnic actuator that actuates the mating mechanism.

8. The safety device according to claim 3, wherein the plastic deformation element is formed in a long strip shape and is configured to include a linear portion provided in an arc shape along an outer periphery of the rotatable plate.

9. The safety device according to claim 8, wherein the plastic deformation element absorbs energy by being plastically deformed through being worked by a working member formed on the rotatable gear member, the working member clamping and drawing out the linear portion in association with rotation of the rotatable plate.

10. The safety device according to claim 9, wherein the plastic deformation element is formed so that an amount of energy absorption is variable along a longitudinal direction.

11. The safety device according to claim 9, wherein the plastic deformation element has a variable amount of energy absorption by varying a cross-sectional shape along a longitudinal direction.

12. The safety device according to claim 9, wherein the amount of energy absorbed by the plastic deformation element is varied by combining a plurality of materials having a different yield stress σ.

13. The safety device according to claim 1 or 2, wherein the vehicle seat includes a seat belt retractor.

14. The safety device according to claim 5, wherein the rotatable gear member is a worm wheel, and the reclining mechanism includes a worm gear mechanism composed of the worm wheel and a worm that meshes therewith.

15. The safety device according to claim 5, wherein the reclining mechanism includes a lock member that restricts rotation of the rotatable gear member, and a lever that releases meshing between the rotatable gear member and the lock member and enables the angle of the seat back to be changed.
